# EUROPEAN PATENT SPECIFICATION

(11) **EP 1 840 476 B1**
(45) Date of publication and mention of the grant of the patent: **17.07.2019**
(21) Application number: 07006475.3
(22) Date of filing: 29.03.2007
(51) Int. Cl.: G05D 7/06, F24F 11/00, F24F 110/30, F24F 11/75

(54) **Air flow control apparatus**
Vorrichtung zur Steuerung des Luftstroms
Appareil de commande de débit d'air

(30) Priority: 31.03.2006 GB 0606497
(43) Date of publication of application: 03.10.2007
(73) Proprietor: NuAire Limited, Caerphilly Mid Glamorgan CF83 1XH (GB)
(72) Inventor: Ngai, Kwok M., Caerphilly Mid Glamorgan CF83 1XH (GB)
(74) Representative: Davies, Gregory Mark

(56) References cited:
- EP-A- 0 409 779
- DE-A1- 4 424 652
- DE-U1- 29 915 190
- FR-A- 2 232 720
- GB-A- 2 238 885
- US-A- 3 415 178
- US-A- 4 191 209
- US-A- 4 406 397
- US-A- 4 553 696

## Description

The present invention relates to an air flow control apparatus. In particular, but not exclusively, the present invention relates to an airflow control apparatus for use in a building's ventilating system to control the rate of flow of air between a room in the building and a ventilation duct.

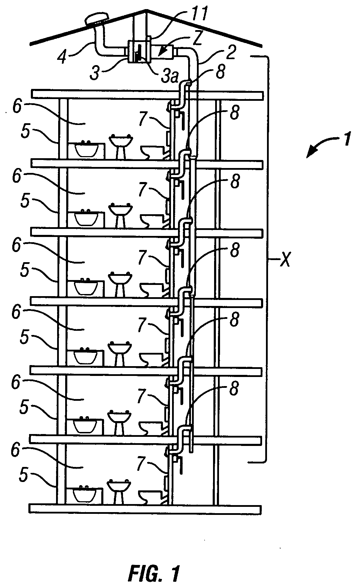

Constant pressure ventilating systems for ventilating individual rooms within a building, particularly high-rise buildings like hotels and apartment blocks are known. A typical constant pressure system of the type supplied by the applicant is illustrated in Figure 1.

High-rise building 1 contains a main ventilating duct 2 that extends vertically through the building 1. A fan chamber 3 is provided at the top of the main ventilating duct 2 and contains a motor driven ventilating fan 3a. The ventilating fan 3a generates a flow of air through the main ventilating duct 2, which flow of air is discharged to the atmosphere through a discharge duct 4 connected to the fan chamber 3.

The building 1 comprises several floors 5, each comprising a room 6 adjacent to the main ventilating duct 2. The rooms 5 are separated from the main ventilating duct 2 by walls 7. Branch ventilating ducts 8 extend through the walls 7 to provide communication between each room 6 and the main ventilating duct 2. Thus in use, the ventilating fan 3a causes air to flow from the rooms 6 through the branch ventilating ducts 8 and through the main ventilating duct 2 for discharging to the atmosphere via discharge duct 4.

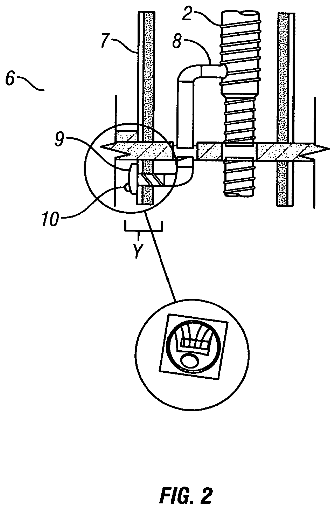

As illustrated in Figure 2, an airflow damper 9 terminates each branch-ventilating duct 8 at the room end. In one system offered by the applicant, and as illustrated in Figure 2, the airflow 9 is a motorised two-position damper grille known as the NRG grille. The NRG damper grille 9 comprises a shutter (not shown) that is motor driveable between a closed position and an open position. In the closed position, the grille 9 enables a trickle ventilation rate (for example 8 litres/sec) for a room 6 to be achieved as background ventilation and in the open position a boosted ventilation rate (for example 24 litres/sec) for a room 6 to be achieved.

The NRG damper grille 9 comprises an Infra Red motion sensor 10 for detecting room occupancy. When a person enters a currently un-occupied room, the sensor 10 detects movement and in response, the shutter (not shown) is driven from the trickle ventilation position to the boost ventilation position.

A pressure sensor 11 mounted at the fan chamber 3 continually monitors the system's pressure and compares it to a pre-set target pressure that the fan 3a is configured to maintain. When a room becomes occupied and a grill 9 opens, the pressure in the system reduces. The pressure sensor 11 detects the reduction and increases the fan speed to return the system's pressure to the pre-set target. This results in a boosted extract rate from the newly occupied room, whilst maintaining the trickle rate in any remaining un-occupied rooms and maintaining the boosted rate in any already occupied rooms.

The NGR grille 9 is configured to close to the trickle flow rate position approximately twenty minutes after the last movement in a room 6 is detected. The closing of a grille 9 causes the system's pressure to increase above the pre-set target pressure. The pressure sensor 11 detects the increase and decreases the fan speed to return the system's pressure to the pre-set target. This results in a trickle extract rate from the newly un-occupied room, whilst maintaining the trickle rate in any remaining un-occupied rooms and maintaining the boosted rate in any occupied rooms.

In such a constant pressure ventilation system, the pressure setting (z) at the fan 3a is negative (for example negative 150Pa) relative to the atmospheric pressure of the rooms.

Moreover, the pressure drop (X) in the ducting from the fan 3a to any given grille 9 added to the pressure drop (Y) across that grille 9 to the room 6 is equal to the pressure setting of the fan, i.e. Z = X + Y.

A system is normally commissioned to ensure that it can deliver the boost flow rate from all the rooms 6 simultaneously. The pressure drop through the ductwork 2 is a function of the total airflow through the ductwork 2, whilst the pressure drop through a grille 9 is a function of the airflow through that grille 9. Thus, when a majority of the grilles 9 are in the trickle position (for example, all of them in Figure 1, except the lowest) the ductwork pressure drop (X) is less than it is when all of the grilles 9 are in the boost position. However, as explained above, the fan pressure is maintained at a pre-determined constant (Z) and so the pressure drop through the grilles 9 must increase to make up the shortfall. This results in over-ventilation of the rooms 6, especially those having a grille in the boost position.

To minimize this effect, a design constraint is imposed by setting the airflow resistance of the grilles 9 higher (for example twice as high) than that of the ducting 2. Thus in use, the pressure drop (Y) across a grille is higher than the pressure drop (X) across the ducting, for example Y = 2X if the airflow resistance of the grille 9 is twice that of the ducting 2. Consequently, any drop in X need be compensated by a relatively small increase in Y to maintain Z constant, resulting in a relatively small increase in flow rate through the grille 9. This constraint reduces the over ventilating problem but cannot eliminate it completely.

Furthermore, this design constraint results in a higher than ideal system airflow resistance, which reduces the energy saving benefits of using a constant pressure system.

Prior art document EP0409779 discloses apparatus for controlled ventilation of rooms comprising a duct portion surrounding a tubular hollow body which has two pressure measuring chambers arranged successively in the flow direction. A measuring device is connected by air tunnels to the first and second pressure chambers of the hollow body. The measuring device has an air flow passage passing there-through and communicating with the air within. The measuring device measures air flow rates through the duct by measuring the pressure differences between the first and second pressure chambers wherein its measuring device directs the control device to operate the control member thereby allowing the volume of air delivered through the duct to be regulated. The control member is separate from the control body. Beneficially, the apparatus has low flow losses and low flow noise and permits a particularly accurate measurement.

Prior art document US 4191 209 discusses apparatus for providing an air redirecting means in the air flow close to and upstream from the air flow fluid sensor comprises an air distribution with taking a housing, damper means that is mounted in the housing for adjustable restricting the airflow and control means for adjusting the damper in response to the air flow through the housing to regulate the air flow and deliver a substantially constant volume air flow.

In the case where all intention velocity distribution is detected air is redirected so as to flow close to and adjacent to the sensor in order to provide a more representative air velocity condition at the sensor. It is noted that the air redirecting element 40 is mounted for more movement so that air brought into contact with it will reposition the element in response to all uneven velocity distribution. Further, the elements 43 are abutment stops for limiting the pivotal movement of the redirecting element.

It is desirable to provide a fluid flow control apparatus that can control the flow rate of fluid flowing there through in a convenient and accurate manner.

According to a first aspect of the present invention there is provided an air flow control apparatus for a ventilation system, comprising: a housing having an inlet and an outlet; a controller for controlling air flow through the housing from the inlet to the outlet; a sensor for sensing air flow through the housing and generating an output signal that depends upon the flow rate of the air through the housing, and wherein the controller is arranged to control the flow rate of the air through the housing and a damper arrangement located within the housing comprising a first damper plate defining an aperture through which air flowing through the housing can flow and a second damper plate opposing the first damper plate, wherein the controller is arranged to control the relative movement between the damper plates so as to vary the size of the area of the housing through which the air flows to thereby control the flow rate.

Preferably, the controller is arranged to control the air flow through the housing such that the flow rate meets a pre-determined target. Advantageously, if it is sensed that the flow rate has deviated from the target flow rate the controller controls the flow rate so that it returns to the target rate.

Preferably, the controller is configurable to control the air flow through the housing such that the flow rate meets either a first pre-determined target or a second higher pre-determined target. In a building ventilating system the first target may be a relatively low 'trickle' flow rate suitable for an un-occupied room and the second higher pre-determined target may be a relatively high 'boost' flow rate suitable for an occupied room.

Preferably, the controller is configurable so that the first and second pre-determined target rates are selectable between upper and lower limits.

According to a second aspect of the invention there is provided a ventilating system for ventilating at least one room of a building, the ventilating system comprising a ventilation duct and a fan for causing an air flow through the duct to ventilate the at least one room, the ventilating system further comprising an air flow apparatus according to the first aspect of the invention, the air flow apparatus connected to or in the duct to control the rate of flow of air between the room and the duct.

An embodiment of the invention will now be described by way of example only with reference to the accompanying drawing in which:
Figure 1 is a schematic diagram of a constant pressure ventilation system;
Figure 2 is a schematic diagram of an enlarged section of Figure 1;
Figure 3 is a schematic diagram of an airflow damper embodying the present invention.

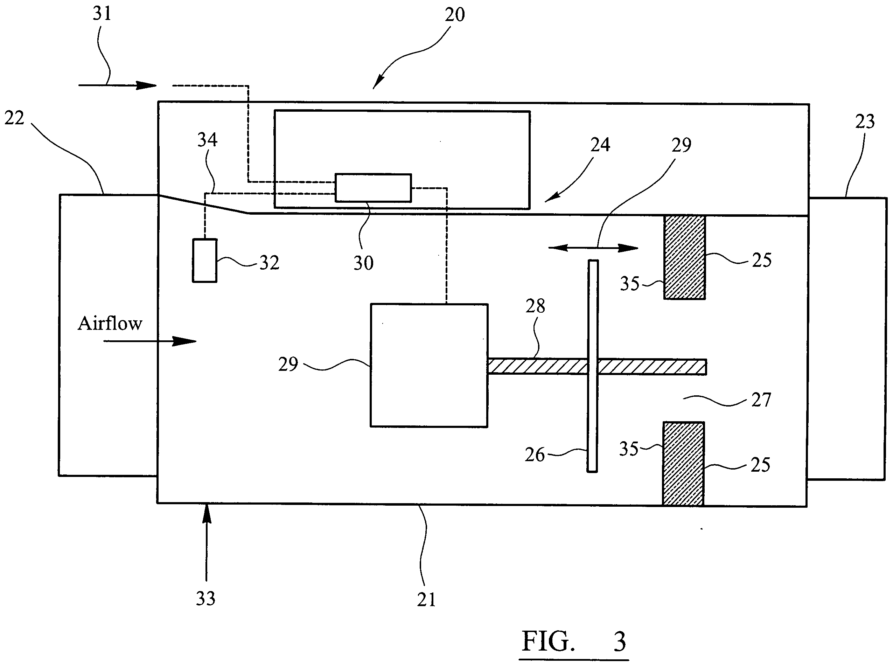

Referring now to Figure 3 of the drawings, there is illustrated an airflow control device 20 embodying the present invention. The airflow control device 20 comprises a housing 21 formed of a rigid material, for example metal or moulded plastic. The housing 21 includes at its respective ends an open inlet spigot 22 and an open outlet spigot 23 and defines an airflow path from the inlet 22 to the outlet 23.

In one embodiment of the invention, such an airflow control device 20 replaces the NGR damper grille 9 in each room served by the constant pressure ventilation system 1 of Figure 1. The device 20 is mounted by means of its outlet spigot 23 to the room end of a branch ventilating duct 8 and is mounted by means of its inlet spigot 22 to a wall 7. The device 20 therefore defines an airflow path from a room 6 into a branch ventilating duct 8.

The device 20 further comprises an airflow control system 24 for controlling the amount of airflow through the device 20. In a preferred embodiment, the airflow control system 24 comprises a static damper plate 25 and a movable damper plate 26. The static damper plate 25 is mounted at a fixed position within the housing 21 toward the outlet 23. The static damper plate 25 is co-axial with the housing 21 and has a central aperture 27.

The movable damper plate 26 is mounted on a linear driver 28 within the housing 21 on the inlet side of the static damper plate 25 facing the central aperture 27. The static damper plate 25 is also co-axial with the housing 21 and has a diameter greater than that of the central aperture 27.

The linear driver 28 is coupled to a bi-directional motor 29 for driving the moveable damper plate 26 back and forth relative to the static damper plate 25. The moveable damper plate 26 has a travel range 28 and may be moved to any position within this range 29 to control the airflow through the central aperture 27 and hence through the device 20.

The control system 24 further comprises a processor 30 for controlling the motor 29 to position the moveable damper plate 26. In the preferred embodiment, the control system 24 is configured so that the device 20 provides either a trickle flow rate or a higher boost flow rate. The target trickle flow rate is a rate suitable for when the room being ventilated is un-occupied and the boost flow rate a rate suitable for when the room is occupied.

A control signal 31 from an infra-red motion sensor (not shown) is fed to the processor 30, which selects on the basis of the signal 30 whether the device is to operate at the trickle flow rate (when no motion is detected) or the boost flow rate (when motion is detected) and controls the motor 29 to position the moveable damper plate 26 appropriately. Preferably, the processor 30 is arranged to maintain the device operating at the boost flow rate for a pre-determined time period, say 20 minutes, after the detection of the last movement in the room. This prevents the device 20 needlessly switching to trickle flow rate on occasions that the room is left only momentarily un-occupied. Other means may be used to select whether the device is to operate at trickle flow rate or boost flow rate, for example, a manual switch operated by an occupant or a signal from a Building Management System (BMS) control.

The actual target flow rates in both the trickle flow rate setting and the boost flow rate setting may be set at any desired value between a minimum value and a maximum value by means of potentiometers (not shown).

Alternatively, the target flow rates may be selected as any value between the maximum and minimum values by means of a signal (not shown) input from an external sensor (not shown), for example a carbon dioxide sensor measuring the quality of the air in the room.

The device 20 further comprises an air velocity sensor 32 located within the housing 21 the inlet side of the moveable damper plate 26 in a measurement section 33. In use, the air velocity sensor 32 measures the airflow through the measurement section 33, generates a signal 34 indicative of the airflow rate through the section and feeds the signal to the processor 30.

In both the trickle flow rate mode and the boost flow rate mode, the processor 30 processes the signal 34 and controls the motor 29 to position the moveable damper plate 26 so that the actual flow rate through the device 20 meets the set target flow rate. In practice, provided the pressure differential across the device 20 is within a pre-determined range, the target airflow rate can be maintained. The pre-determined pressure differential range will be dependent upon the design of the device 20, in particular the geometry of the air-flow path, the size of the aperture 27 and the range of travel of the moveable damper plate 25.

Thus, a constant pressure ventilating system 1 incorporating devices 20 in place of the grilles 8 will not suffer from the over ventilating problem described in the introduction. Any over ventilating of a room will be instantly detected by the control system 24 and the moveable damper 26 moved so as to lower the airflow rate back to the target rate. Furthermore, the design constrain applied to known systems that the airflow resistance of the dampers should be considerably higher than that of the ducting need not apply to systems embodying the present invention resulting in energy efficiency gains.

The design of the dampers 25, 26 produces a constant streamline pattern at the measurement section 33 over the range of airflow rates that the device 20 will likely carry in a constant pressure ventilation system. Advantageously, this helps ensure that local air velocity measured by the air velocity sensor 31 is representative of the air velocity through the measurement section 32 as a whole. It will be appreciated however, that different designs of airflow damping systems are possible for varying the effective area of an airflow section to meet a target flow rate.

Preferably, soft compressible material 35, for example open-cell foam or the like, is placed on the static damper plate 25, as illustrated, or alternatively the moveable damper plate 26 or indeed both plates. This material 35 helps prevent a whistling noise generated when airflow is forced past the dampers. The compressible property of the material allows for fine adjustment of airflow when the damper is driven against the material.

In known constant pressure ventilation systems offered by the applicant, NRG-IL inline dampers may be used as an alternative to the NRG grilles 9. In such systems each NRG-IL inline damper function in a similar manner as an NRG grille 8 but is connected in-line and part way along a branch duct 8 rather than at the end of a branch duct 8 as is grille 9. It will be appreciated that in such systems a device 20 may also be used connected in-line and part way along a branch duct 8 in place of an NRG-IL inline damper.

Although the embodiment described above relates to a building ventilation system it will be appreciated that the invention may advantageously be used in other applications requiring control of a fluid's flow rate. Although the embodiment described above relates to a building ventilation system in which air is drawn from a room the invention may also advantageously be used in ventilation systems in which air is blown into a room.

Having thus described the present invention by reference to a preferred embodiment it is to be well understood that the embodiment in question is exemplary only and that modifications and variations such as will occur to those possessed of appropriate knowledge and skills may be made without departure from the invention as set forth in the appended claims and equivalents thereof. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements.

## Claims

1. Air flow control apparatus for a ventilation system, comprising:
a housing having an inlet and an outlet;
a controller for controlling air flow through the housing from the inlet to the outlet;
a sensor for sensing air flow through the housing and generating an output signal that depends upon the flow rate of the air through the housing;
and a damper arrangement located within the housing, **characterized in that** the damper arrangement comprises a first damper plate having an aperture formed therein through which air flowing through the housing can flow and a second damper plate opposing the first damper plate,
further **characterized in that** the controller is arranged to control the relative movement between the damper plates in dependence upon the sensor output so as to vary the size of the area of the housing through which the air flows to thereby control the flow rate.

2. Air flow apparatus according to claim 1 wherein the first damper plate is static and the second damper is movable, and the second damper plate is coaxial with the housing and has a diameter greater than the aperture of the static first damper plate.

3. Air flow apparatus according to claim 2, wherein the controller is arranged to control the air flow through the housing such that the flow rate meets a pre-determined target.

4. Air flow apparatus according to claim 2 or 3 wherein the controller is configurable to control the air flow through the housing such that the flow rate meets either a first pre-determined target or a second higher pre-determined target.

5. Air flow apparatus according to claim 4 wherein the controller is configurable so that the first and second pre-determined target rates are selectable between upper and lower limits.

6. Air flow apparatus according to claim 1 wherein the first damper plate is fixed in the housing and the second damper plate is moveable relative to the first damper plate.

7. Air flow apparatus according to claim 6, the damper arrangement further comprising a drive mechanism for reciprocally moving the second damper plate relative to the first damper plate.

8. Air flow apparatus according to claim 5 wherein the damper arrangement comprises at least one surface comprising a material that inhibits noise generated by air flowing thereover.

9. Air flow apparatus according to any of claims 6 to 8 wherein at least one of the first damper plate and second damper plate has a surface comprising a material that inhibits noise generated by air flowing there over.

10. Air flow apparatus according to any proceeding claim, wherein the sensor is an air velocity sensor.

11. Air flow apparatus according to claim 1, wherein the pre-determined target flow rate is selectable between upper and lower limits.

12. Air flow apparatus according to claim 11 wherein the pre-determined target flow rate is selectable by means of a signal input by a gas sensor.

13. Ventilating system for ventilating at least one enclosed space in a building, the ventilating system comprising a ventilation duct and a fan arrangement for causing an air flow through the duct to ventilate the at least one enclosed space, the ventilating system further comprising an air flow control apparatus according to any preceding claim, the air flow apparatus connected to or in the duct to control the rate of flow of air between the enclosed space and the duct.

14. Ventilating system according to claim 13, wherein the system is a constant pressure system arranged in use to vary the speed of the fan to maintain a constant pre-determined pressure difference between the fan and the at least one enclosed space.

15. A ventilating system according to claim 13 or 14 wherein the ventilation system is for ventilating a plurality of enclosed spaces in a building, the ventilation system comprising a plurality of ventilation ducts, one for each of the enclosed spaces, a fan arrangement for causing air flow through the ducts to ventilate the plurality of enclosed spaces, and a plurality of air flow control apparatus as claimed in any preceding claim, each air flow control apparatus connected to or in a respective one of the ducts, to control the air flow rate between a respective one of the enclosed spaces and the duct.

## Patentansprüche

1. Luftstromsteuerungsvorrichtung für ein Lüftungssystem, Folgendes umfassend:
ein Gehäuse, das einen Einlass und einen Auslass aufweist;
eine Steuerung zum Steuern des Luftstroms durch das Gehäuse vom Einlass zum Auslass;
einen Sensor zum Erfassen eines Luftstroms durch das Gehäuse und zum Erzeugen eines Ausgabesignals, das von der Strömungsgeschwindigkeit der Luft durch das Gehäuse abhängig ist;
und eine Dämpferanordnung, die sich im Gehäuse befindet, **dadurch gekennzeichnet, dass** die Dämpferanordnung eine erste Dämpferplatte, die eine darin ausgebildete Öffnung aufweist, durch die durch das Gehäuse strömende Luft strömen kann, und eine zweite Dämpferplatte, die der ersten Dämpferplatte gegenüberliegt, umfasst,
weiter **dadurch gekennzeichnet, dass** die Steuerung dazu angeordnet ist, die relative Bewegung zwischen den Dämpferplatten in Abhängigkeit von der Sensorausgabe zu steuern, um die Größe des Bereichs des Gehäuses, durch den die Luft strömt, zu variieren und somit die Strömungsgeschwindigkeit zu steuern.

2. Luftstromvorrichtung nach Anspruch 1, wobei die erste Dämpferplatte statisch und die zweite Dämpferplatte beweglich ist und wobei die zweite Dämpferplatte koaxial zum Gehäuse verläuft und einen Durchmesser aufweist, der größer als die Öffnung der statischen ersten Dämpferplatte ist.

3. Luftstromvorrichtung nach Anspruch 2, wobei die Steuerung dazu angeordnet ist, den Luftstrom durch das Gehäuse zu steuern, sodass die Strömungsgeschwindigkeit einen vorgegebenen Sollwert erreicht.

4. Luftstromvorrichtung nach Anspruch 2 oder 3, wobei die Steuerung dazu ausgelegt werden kann, den Luftstrom durch das Gehäuse zu steuern, sodass die Strömungsgeschwindigkeit entweder einen ersten vorgegebenen Sollwert oder einen zweiten, höheren, vorgegebenen Sollwert erreicht.

5. Luftstromvorrichtung nach Anspruch 4, wobei die Steuerung so ausgelegt werden kann, dass der erste und zweite vorgegebene Sollwert zwischen einem oberen und unteren Grenzwert ausgewählt werden können.

6. Luftstromvorrichtung nach Anspruch 1, wobei die erste Dämpferplatte im Gehäuse fixiert ist und die zweite Dämpferplatte in Bezug zur ersten Dämpferplatte beweglich ist.

7. Luftstromvorrichtung nach Anspruch 6, wobei die Dämpferanordnung ferner einen Antriebsmechanismus umfasst, um die zweite Dämpferplatte in Bezug zur ersten Dämpferplatte auf und ab zu bewegen.

8. Luftstromvorrichtung nach Anspruch 5, wobei die Dämpferanordnung mindestens eine Fläche umfasst, die ein Material umfasst, das vom darüber strömenden Luftstrom erzeugte Geräusche dämmt.

9. Luftstromvorrichtung nach einem der Ansprüche 6 bis 8, wobei die erste Dämpferplatte und/oder die zweite Dämpferplatte eine Fläche aufweist, die ein Material umfasst, das vom darüber strömenden Luftstrom erzeugte Geräusche dämmt.

10. Luftstromvorrichtung nach einem der vorstehenden Ansprüche, wobei der Sensor ein Luftgeschwindigkeitssensor ist.

11. Luftstromvorrichtung nach Anspruch 1, wobei die vorgegebene Sollströmungsgeschwindigkeit zwischen einem oberen und unteren Grenzwert ausgewählt werden kann.

12. Luftstromvorrichtung nach Anspruch 11, wobei die vorgegebene Sollströmungsgeschwindigkeit mittels einer Signaleingabe eines Gassensors ausgewählt werden kann.

13. Lüftungssystem zum Lüften mindestens eines geschlossenen Raums in einem Gebäude, wobei das Lüftungssystem einen Lüftungsschacht und eine Ventilatoranordnung umfasst, um einen Luftstrom durch den Schacht zu bewirken, um den mindestens einen geschlossenen Raum zu belüften, wobei das Lüftungssystem ferner eine Luftstromsteuerungsvorrichtung nach einem der vorstehenden Ansprüche umfasst, wobei die Luftstromvorrichtung mit dem Schacht verbunden oder darin angeordnet ist, um die Strömungsgeschwindigkeit der Luft zwischen dem geschlossenen Raum und dem Schacht zu steuern.

14. Lüftungssystem nach Anspruch 13, wobei das System ein Gleichdrucksystem ist, das bei der Verwendung die Geschwindigkeit des Ventilators variieren kann, um einen konstanten, vorgegebenen Druckunterschied zwischen dem Ventilator und dem mindestens einen geschlossenen Raum zu halten.

15. Lüftungssystem nach Anspruch 13 oder 14, wobei das Lüftungssystem zum Belüften mehrerer geschlossener Räume in einem Gebäude bestimmt ist, wobei das Lüftungssystem mehrere Lüftungsschächte, einen für jeden der geschlossenen Räume, eine Ventilatoranordnung, um mit dem Luftstrom durch die Schächte die mehreren geschlossenen Räume zu belüften, und mehrere Luftstromsteuerungsvorrichtungen nach einem der vorstehenden Ansprüche umfasst, wobei die Luftstromsteuerungsvorrichtungen jeweils mit einem der Schächte verbunden oder darin angeordnet sind, um die Luftstromgeschwindigkeit zwischen einem entsprechenden geschlossenen Raum und dem Schacht zu steuern.

## Revendications

1. Appareil de commande de débit d'air pour un système de ventilation, comprenant:
un boîtier comportant une entrée et une sortie;
un dispositif de commande pour commander le débit d'air à travers le boîtier de l'entrée à la sortie;
un capteur pour détecter le débit d'air à travers le boîtier et générer un signal de sortie qui dépend du débit d'air à travers le boîtier;
et un dispositif d'amortissement situé à l'intérieur du boîtier,
**caractérisé en ce que** le dispositif d'amortissement comprend
une première plaque d'amortissement ayant une ouverture formée à l'intérieur de celle-ci à travers laquelle de l'air circulant à travers le boîtier peut s'écouler et une seconde plaque d'amortissement opposée à la première plaque d'amortissement,
**caractérisé en outre**
**en ce que** le dispositif de commande est agencé pour commander le mouvement relatif entre les plaques d'amortissement en fonction de la sortie du capteur de manière à faire varier la taille de la zone du boîtier à travers laquelle l'air circule pour commander ainsi le débit.

2. Appareil d'écoulement d'air selon la revendication 1, dans lequel la première plaque d'amortissement est statique et la deuxième plaque d'amortissement est mobile, et la seconde plaque d'amortissement est coaxiale avec le boîtier et a un diamètre supérieur à l'ouverture de la première plaque d'amortissement statique.

3. Appareil d'écoulement d'air selon la revendication 2, dans lequel le dispositif de commande est agencé pour commander l'écoulement d'air à travers le boîtier de telle sorte que le débit d'air atteigne une cible prédéterminée.

4. Appareil d'écoulement d'air selon la revendication 2 ou 3, dans lequel le dispositif de commande peut être configuré pour commander l'écoulement d'air à travers le boîtier de telle sorte que le débit atteigne soit une première cible prédéterminée, soit une seconde cible prédéterminée supérieure.

5. Appareil d'écoulement d'air selon la revendication 4, dans lequel le dispositif de commande peut être configuré de sorte que les premier et second débits cibles prédéterminés puissent être choisis entre des limites supérieure et inférieure.

6. Appareil d'écoulement d'air selon la revendication 1, dans lequel la première plaque d'amortissement est fixée dans le boîtier et la seconde plaque d'amortissement est mobile par rapport à la première plaque d'amortissement.

7. Appareil d'écoulement d'air selon la revendication 6, le dispositif d'amortissement comprenant en outre un mécanisme d'entraînement pour déplacer réciproquement la seconde plaque d'amortissement par rapport à la première plaque d'amortissement.

8. Appareil d'écoulement d'air selon la revendication 5, dans lequel le dispositif d'amortissement comprend au moins une surface comprenant un matériau qui inhibe le bruit généré par l'air qui y circule.

9. Appareil d'écoulement d'air selon l'une quelconque des revendications 6 à 8, dans lequel au moins l'une des première et seconde plaques d'amortissement a une surface comprenant un matériau qui inhibe le bruit généré par l'air qui y circule.

10. Appareil d'écoulement d'air selon l'une quelconque des revendications précédentes, dans lequel le capteur est un capteur de vitesse d'air.

11. Appareil d'écoulement d'air selon la revendication 1, dans lequel le débit cible prédéterminé peut être choisi entre des limites supérieure et inférieure.

12. Appareil d'écoulement d'air selon la revendication 11, dans lequel le débit cible prédéterminé peut être choisi au moyen d'une entrée de signal par un capteur de gaz.

13. Système de ventilation pour ventiler au moins un espace clos dans un bâtiment, le système de ventilation comprenant un conduit de ventilation et un agencement de ventilateur pour amener un courant d'air à travers le conduit à ventiler l'au moins un espace clos, le système de ventilation comprenant en outre un appareil de commande de débit d'air selon l'une quelconque des revendications précédentes, l'appareil d'écoulement d'air étant connecté au conduit ou dans celui-ci pour commander le débit de l'air entre l'espace clos et le conduit.

14. Système de ventilation selon la revendication 13, dans lequel le système est un système à pression constante agencé en service pour faire varier la vitesse du ventilateur afin de maintenir une différence de pression constante prédéterminée entre le ventilateur et l'au moins un espace clos.

15. Système de ventilation selon la revendication 13 ou 14, dans lequel le système de ventilation est destiné à ventiler une pluralité d'espaces clos dans un bâtiment, le système de ventilation comprenant une pluralité de conduits de ventilation, un pour chacun des espaces clos, un agencement de ventilateur destiné à faire circuler l'air dans les conduits pour ventiler la pluralité des espaces clos, et une pluralité de dispositifs de commande du débit d'air selon l'une quelconque des revendications précédentes, chaque dispositif de commande du débit d'air étant connecté à un conduit respectif ou dans celui-ci, pour commander le débit d'air entre un espace clos respectif et le conduit.
